# EUROPEAN PATENT APPLICATION

(11) **EP 0 773 391 A1**
(43) Date of publication of application: **14.05.1997**
(21) Application number: 96117010.7
(22) Date of filing: 23.10.1996
(51) Int. Cl.: F16H 61/02, F16H 61/16

(54) **Control system for automatic transmission**

(30) Priority: 08.11.1995 JP 290196/95; 16.07.1996 JP 186383/96
(71) Applicant: AISIN AW CO., LTD., Anjo-shi Aichi-ken 444-11 (JP)
(72) Inventor: Niki, Hiroshi, Anjo-shi, Aichi-ken, 444-11 (JP); Nishimura, Ryutaro, Anjo-shi, Aichi-ken, 444-11 (JP)
(74) Representative: VOSSIUS & PARTNER

(57) **Abstract**

A control system of an automatic transmission has a fluid transmission apparatus (12) connected to an engine (10); input speed detecting device (49) for detecting an input-end rotational speed of the hydraulic transmission apparatus; output speed detecting device (47) for detecting an output-end rotational speed of the hydraulic transmission apparatus; and drive-wheel idle rotation determining device (93) for determining whether the rotational speed ratio of the output-end rotational speed to the input-end rotational speed is equal to or greater than a predetermined value. If the rotational speed ratio is equal to or greater than the predetermined value, the determining device determines that a drive wheel is idly rotating. Thus the control system has only to calculate the input-end and output-end rotational speeds of the hydraulic transmission apparatus, and does not need to determine a change of the rotational speed of the output shaft of a transmission apparatus. The control system therefore eliminates the need to monitor the rotational speed of the output shaft, enabling quick detection of idle rotation of a drive wheel and, consequently, quick decision as to whether to inhibit a shift.

## Description

The present invention relates to a control system for an automatic transmission.

In conventional automatic transmissions, a shift is performed by detecting at least a throttle opening and a vehicle speed among various vehicle running conditions, and selecting an optimal gear speed based on the detected vehicle running conditions.

When a vehicle is starting on a road surface with a low friction coefficient, such as an icy road, a snow-covered road, or mud, a drive wheel is likely to slip. The idle rotation of the drive wheel causes the control system of the automatic transmission to determine that the vehicle speed has increased, so that an up-shift is performed. As a result, the drive wheel idly races at an increased rotational speed.

Further, if only one of the right and left drive wheels idly rotates and an up-shift is performed so that the rotational speed difference between the right and left drive wheels becomes very large, the rotation of the drive shafts relative to the differential apparatus becomes large, requiring forced supply of lubricant between them. Thus it becomes necessary to provide the differential apparatus with a lubricant groove, complicating the structure of the differential apparatus.

An automatic transmission control system is proposed (in Japanese patent application laying-open No. HEI-6-185608) wherein a change of the rotational speed of the output shaft of a transmission apparatus is determined, and if the change becomes equal to or greater than a value set corresponding to an engine load, a shift is inhibited.

Another automatic transmission control system is proposed (in Japanese patent application laying-open No. HEI-6-159498) wherein a change of the rotational speed of the output shaft of a transmission apparatus is determined, and if the change becomes equal to or greater than a predetermined value, a shift to a higher speed is inhibited.

However, in both aforementioned conventional automatic transmission control systems, it is necessary to monitor the rotational speed of the output shaft of the transmission apparatus for a predetermined time in order to determine a change of the rotational speed of the output shaft of the transmission apparatus. It is also necessary to detect changes several times and calculate an average of the detected changes in order to eliminate variations in the changes. Thus, the conventional systems require great amounts of time to decide whether to inhibit a shift operation.

Consequently, an unfavorable shift may be performed before the control system achieves shift inhibition.

In addition, since it is necessary to establish a setting corresponding to the characteristics of the engine according to the conventional art, the setting has to be determined separately for different types of engines, thus reducing flexibility.

Furthermore, since the setting must be changed corresponding to the engine loads according to the conventional art, the memory capacity of the control system has to be increased.

It is an object of the present invention to provide a control system of an automatic transmission that solves the aforementioned problems of the conventional automatic transmission control systems, that is, an automatic transmission control system that requires a reduced amount of time to detect idle rotation of a drive wheel and decides in a reduced amount of time whether to inhibit a shift.

According to a first aspect of the invention, there is provided a control system of an automatic transmission comprising: a fluid transmission apparatus connected to an engine, input speed detecting means for detecting an input-end rotational speed of the hydraulic transmission apparatus, output speed detecting means for detecting an output-end rotational speed of the hydraulic transmission apparatus, and drive-wheel idle rotation determining means for determining whether the rotational speed ratio of the output-end rotational speed to the input-end rotational speed is equal to or greater than a predetermined value, and for, if the rotational speed ratio is equal to or greater than the predetermined value, determining that a drive wheel is idly rotating.

With this structure, the control system has only to calculate the rotational speed ratio between the input-end speed and output-end speed of the hydraulic transmission apparatus, and does not need to determine a change of the rotational speed of the output shaft of the transmission apparatus. Thus, the control system eliminates the need to monitor the rotational speed of the output shaft. In addition, because the rotational speed ratio is unlikely to vary, there is no need to determine rotational speed ratios several times. Thus, the control system is able to detect idle rotation of the drive wheels in a short time period and quickly determine whether to inhibit a shift.

Furthermore, because the predetermined value can be established regardless of the characteristics of the engine, the control system eliminates the need to establish different values for different types of engines, thus increasing flexibility.

Since it also becomes unnecessary to establish predetermined values corresponding to engine loads, the control system does not require an increased memory capacity.

Preferably, the control system of an automatic transmission of the invention further comprises shift completion detecting means for detecting completion of a shift. Furthermore, the drive-wheel idle rotation determining means determines that a drive wheel is idly rotating, if the rotational speed ratio is equal to or greater than the predetermined value within a predetermined time period following detection of the completion of a shift.

In normal driving conditions, immediately after the completion of a shift by the transmission apparatus, the output-end rotational speed of the fluid transmission apparatus increases and, consequently, the rotational speed difference of the output-end speed from the input-end rotational speed decreases. Since the drive-wheel idle rotation determining means is designed to determine, under this condition, whether the rotational speed ratio is equal to or greater than a predetermined value, the drive-wheel idle rotation determining means prevents false detection of idle rotation of a drive wheel.

It is also preferred that the control system for an automatic transmission further comprises vehicle speed detecting means for detecting a vehicle speed, and that the drive-wheel idle rotation determining means determine that a drive wheel is idly rotating, if the rotational speed ratio is equal to or greater than the predetermined value within a predetermined time period following detection of the vehicle speed being zero (0).

With this structure, the drive-wheel idle rotation determining means refrains from determining whether the rotational speed ratio is equal to or greater than a predetermined value, during inertia running, such as travel on downhill roads or high-speed cruising. The drive-wheel idle rotation determining means thus prevents false detection in such occasions and ensures reliable detection of idle rotation of a drive wheel.

Preferably, the control system for an automatic transmission further comprises vehicle speed detecting means for detecting a vehicle speed, and throttle opening detecting means for detecting a throttle opening. In addition, the drive-wheel idle rotation determining means determines that a drive wheel is idly rotating, if the vehicle speed is equal to or less than a predetermined value and the throttle opening is equal to or greater than a predetermined value and the rotational speed ratio is equal to or greater than the predetermined value.

With this structure, the drive-wheel idle rotation determining means refrains from determining whether the rotational speed ratio is equal to or greater than a predetermined value, during inertia running, such as travel on downhill roads or high-speed cruising. The drive-wheel idle rotation determining means thus prevents false detection in such occasions and ensures reliable detection of idle rotation of a drive wheel.

Preferably, the control system of an automatic transmission further comprises vehicle speed detecting means for detecting a vehicle speed with the predetermined value being changed on the basis of the detected vehicle speed.

Since this structure changes the predetermined value in accordance with the vehicle speed and since the rotational speed ratio increases with increases of the vehicle speed, the structure prevents an incident where the drive-wheel idle rotation determining means provides a false detection of idle rotation of a drive wheel, thus ensuring reliable inhibition of the transmission apparatus from performing a shift.

According to another aspect of the invention, there is provided a control system for an automatic transmission comprising: a fluid transmission apparatus connected to an engine, input speed detecting means for detecting an input-end rotational speed of the hydraulic transmission apparatus, output speed detecting means for detecting an output-end rotational speed of the hydraulic transmission apparatus, drive-wheel idle rotation determining means for determining whether the rotational speed ratio of the output-end rotational speed to the input-end rotational speed is equal to or greater than a predetermined value, and for, if the rotational speed ratio is equal to or greater than the predetermined value, determining that a drive wheel is idly rotating, and shift inhibiting means for inhibiting a transmission apparatus from performing a shift if it is determined that the drive wheel is idly rotating.

With this set up, the control system has only to calculate the rotational speed ratio between the input-end speed and output-end speed of the hydraulic transmission apparatus, and does not need to determine a change of the rotational speed of the output shaft of the transmission apparatus. Thus, the control system eliminates the need to monitor the rotational speed of the output shaft. In addition, because the rotational speed ratio is unlikely to vary, there is no need to determine rotational speed ratios several times. Thus, the control system is able to detect idle rotation of the drive wheels in a short time period and, if such idle rotation is detected, quickly inhibit a shift.

Furthermore, even if the drive wheel idles or races on a road with a small friction coefficient, such as an icy road, a snow-covered road, or mud, at the start of running, the control system prevents an up-shift operation. Therefore, since the control system prevents an incident where only one of the right and left drive wheels races to an increased extent, the control system prevents the rotational speed difference between the right and left drive wheels from becoming extremely large. The control system also prevents the differential apparatus and the drive shafts from rotating relative to each other to increased extents.

Preferably, when shift determination is performed and the drive-wheel idle rotation determining means detects idle rotation of a drive wheel, the output of a shift signal is held, and the output of the shift signal is erased if the drive-wheel idle rotation determining means detects idle rotation of a drive wheel within a predetermined time period following the shift determination.

With this structure, if the drive-wheel idle rotation determining means detects idle rotation of a drive wheel after shift determination is performed, the output shift signal is held. The output shift signal produced by the shift determination is erased if idle rotation of a drive wheel is detected within a predetermined time period. Thus, even after a shift determination is performed, the control system can hold and inhibit a shift operation if the drive-wheel idle rotation determining means detects idle rotation of a drive wheel.

Preferably, the control system of an automatic transmission further comprises shift completion detecting means for detecting completion of a shift, and the drive-wheel idle rotation determining means determines that a drive wheel is idly rotating, if the rotational speed ratio is equal to or greater than the predetermined value within a predetermined time period following detection of the completion of a shift.

In normal driving conditions, immediately after the completion of a shift by the transmission apparatus, the output-end rotational speed of the fluid transmission apparatus increases and, consequently, the rotational speed difference of the output-end speed from the input-end rotational speed decreases. Since the drive-wheel idle rotation determining means is designed to determine, under this condition, whether the rotational speed ratio is equal to or greater than a predetermined value, the drive-wheel idle rotation determining means prevents false detection of idle rotation of a drive wheel.

It is also preferred that the control system for an automatic transmission further comprises vehicle speed detecting means for detecting a vehicle speed, and that the drive-wheel idle rotation determining means determine that a drive wheel is idly rotating, if the rotational speed ratio is equal to or greater than the predetermined value within a predetermined time period following detection of the vehicle speed being zero (0).

With this structure, the drive-wheel idle rotation determining means refrains from determining whether the rotational speed ratio is equal to or greater than a predetermined value, during inertia running, such as travel on downhill roads or high-speed cruising. The drive-wheel idle rotation determining means thus prevents false detection in such occasions and ensures reliable detection of idle rotation of a drive wheel.

Preferably, the automatic transmission control system according to the invention further comprises vehicle speed detecting means for detecting a vehicle speed, and throttle opening detecting means for detecting a throttle opening. Furthermore, the drive-wheel idle rotation determining means determines that a drive wheel is idly rotating, if the vehicle speed is equal to or less than a predetermined value and the throttle opening is equal to or greater than a predetermined value and the rotational speed ratio is equal to or greater than the predetermined value.

With this structure, the drive-wheel idle rotation determining means refrains from determining whether the rotational speed ratio is equal to or greater than a predetermined value, during inertia running, such as travel on downhill roads or high-speed cruising. The drive-wheel idle rotation determining means thus prevents false detection in such occasions and ensures reliable detection of idle rotation of a drive wheel.

Preferably, the control system for an automatic transmission according to the invention further comprises vehicle speed detecting means for detecting a vehicle speed. Furthermore, the predetermined value is changed on the basis of the detected vehicle speed.

Since this structure changes the predetermined value in accordance with the vehicle speed and since the rotational speed ratio increases with increases of the vehicle speed, the structure prevents an incident where the drive-wheel idle rotation determining means provides a false detection of idle rotation of a drive wheel, thus ensuring reliable inhibition of the transmission apparatus from performing a shift.

It is also preferred that the control system for an automatic transmission further comprises shift inhibition canceling means for canceling the inhibition of the transmission apparatus from performing a shift, if one of the following conditions is satisfied: the rotational speed ratio becomes equal to or less than a predetermined value determined for the cancellation of shift inhibition; the throttle opening becomes equal to or less than a predetermined value; and the inhibition of a shift continues for at least a predetermined time period.

With this structure, the transmission apparatus becomes able to perform a normal shift if a drive wheel is loaded, or if the torque at the input end of the fluid transmission apparatus decreases, or if the inhibition of a shift has continued for at least a predetermined time period.

The foregoing and further objects, features and advantages of the invention will become apparent from the following description of preferred embodiments with reference to the accompanying drawings, wherein:
Fig. 1 is a functional block diagram of an automatic transmission control system according to the first embodiment of the invention;
Fig. 2 is a schematic diagram of an automatic transmission according to the first embodiment of the invention;
Fig. 3 is a table illustrating the operation of the automatic transmission according to the first embodiment of the invention;
Fig. 4 is a flowchart illustrating the operation of the automatic transmission control system according to the first embodiment of the invention;
Fig. 5 is a flowchart illustrating the cancellation of shift inhibition according to the first embodiment of the invention;
Fig. 6 is a graph indicating the relation between the vehicle speed and the predetermined value according to a second embodiment of the invention;
Fig. 7 is a flowchart illustrating the operation of an automatic transmission control system according to the second embodiment of the invention;
Fig. 8 is a flowchart illustrating the operation of an automatic transmission control system according to a third embodiment of the invention;
Fig. 9 is a flowchart illustrating the operation of an automatic transmission control system according to a fourth embodiment of the invention; and
Fig. 10 is a flowchart illustrating the operation of an automatic transmission control system according to the fourth embodiment of the invention.

Preferred embodiments of the present invention will be described hereinafter with reference to the accompanying drawings.

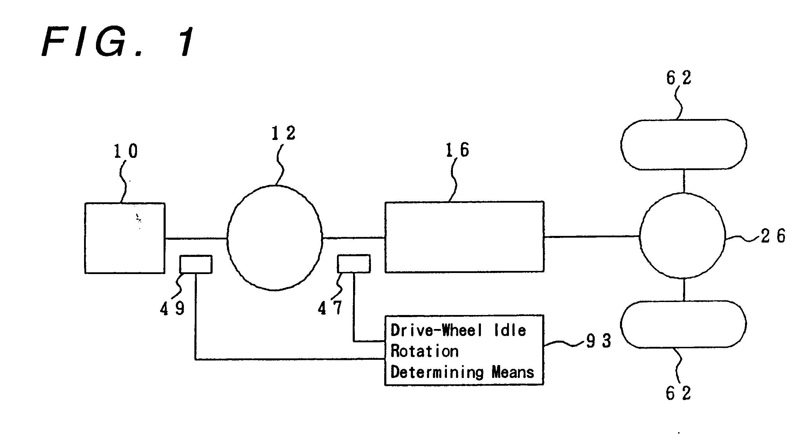

An automatic transmission control system according to a first embodiment of the invention is shown in Fig. 1.

Fig. 1 shows an engine 10, a torque converter 12 as a fluid transmission apparatus connected to the engine 10, a transmission apparatus 16, a differential apparatus 26 and drive wheels 62. Furthermore, 49 denotes an engine speed sensor provided as an input rotational speed detecting means for detecting an engine speed as an input-end rotational speed of the torque converter 12, and 47 denotes a C-1 rotational speed sensor provided as an output rotational speed detecting means for detecting C-1 rotational speed as an output-end rotational speed of the torque converter 12, and 93 denotes drive-wheel idle rotation determining means for determining whether the rotational speed ratio r of the C-1 rotational speed to the engine speed is equal to or greater than a predetermined value α, and for, if the rotational speed ratio r is equal to or greater than the predetermined value α, determining that a drive wheel 62 is idly rotating.

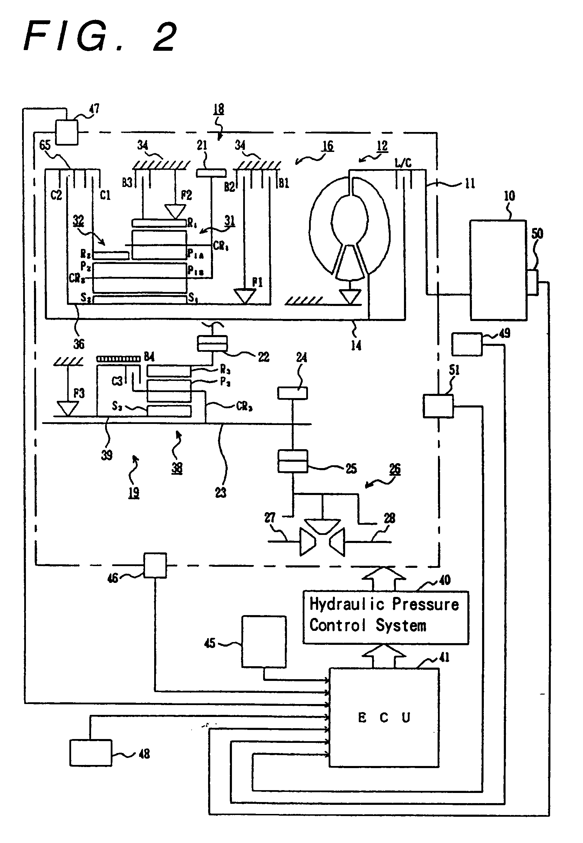

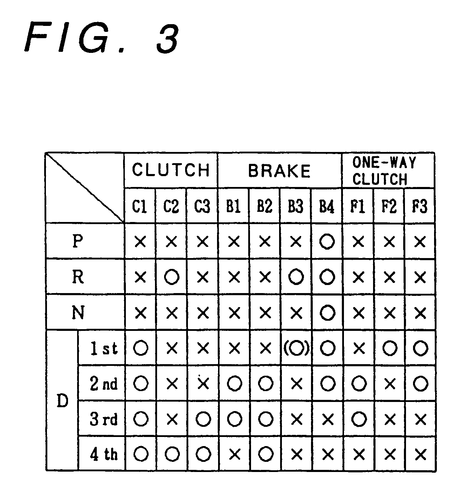

Fig. 2 is a schematic diagram of an automatic transmission according to the first embodiment of the invention. Fig. 3 is a table showing the operation of the automatic transmission according to the first embodiment of the invention.

The rotation generated by the engine 10 is transmitted to the torque converter 12 by an output shaft 11 as shown in Fig. 2. The torque converter 12 transmits rotation from the engine 10 to an output shaft 14 using a fluid (hydraulic oil). When the vehicle speed v becomes equal to or greater than a predetermined value, a lockup-on signal is generated to engage a lockup clutch L/C so as to allow direct transmission to the output shaft 14.

The output shaft 14 is connected to a transmission apparatus 16 for shifts of four forward speeds and one rear speed. The transmission apparatus 16 is made up of a main shift device 18 for three forward speeds and one rear speed, and an auxiliary shift device 19 for under-drive. Rotation from the main transmission apparatus 18 is transmitted to the auxiliary transmission apparatus 19 by a counter drive gear 21 and a counter driven gear 22. The rotation of an output shaft 23 of the auxiliary transmission apparatus 19 is transmitted to the differential apparatus 26 by an output gear 24 and a ring gear 25.

In the differential apparatus 26, the rotation transmitted by the output gear 24 and the ring gear 25 is differentiated, and the differentiated rotations are transmitted to the drive wheels 62 (Fig. 1) by right and left drive shafts 27, 28.

The main transmission apparatus 18 has a first planetary gear unit 31 and a second planetary gear unit 32, and further has a first clutch C1, a second clutch C2, a first brake B1, a second brake B2, a third brake B3, and one-way clutches F1, F2 in order to perform selective torque transmission between individual elements of the first and second planetary gear units 31, 32

The first planetary gear unit 31 is made up of a ring gear R₁ connected to a drive apparatus casing 34 by the third brake B3 and the one-way clutch F2 disposed in parallel to each other, a sun gear S₁ formed on a sun gear shaft 36 that is fitted over and freely rotatably supported on the output shaft 14, a carrier CR₁ connected to the counter drive gear 21, and pinions P_{1A}, P_{1B} that are disposed between and meshed with the ring gear R₁ and the sun gear S₁ and freely rotatably supported by the carrier CR₁.

The sun gear shaft 36 is connectable to the output shaft 14 by means of the second clutch C2. The sun gear shaft 36 is also connected to the drive apparatus casing 34 by means of the brake B1 and by means of the one way clutch F1 and the second brake B2 disposed in line.

On the other hand, the second planetary gear unit 32 is made up of: a ring gear R₂ connected to the output shaft 14 by the first one-way clutch C1, a sun gear S₂ formed unitarily with the sun gear S₁ on the sun gear shaft 36, a carrier CR₂ connected to the carrier CR₁, and a pinion P₂ that is formed unitarily with the pinion P_{1B}, disposed between and meshed with the ring gear R₂ and the sun gear S₂, and freely rotatably supported by the carrier CR₂.

The counter drive gear 21 is meshed with the counter driven gear 22 disposed in the auxiliary transmission apparatus 19, and transmits to the auxiliary transmission apparatus 19 the rotation speed-changed by the main transmission apparatus 18.

The auxiliary transmission apparatus 19 has a third planetary gear unit 38, and further has a third clutch C3, a fourth brake B4 and a one-way clutch F3 in order to perform selective transmission between individual elements of the third planetary gear unit 38.

The third planetary gear unit 38 is made up of a ring gear R₃ connected to the counter driven gear 22, a sun gear S₃ formed on a sun gear shaft 39 freely rotatably fitted on the output shaft 23, a carrier CR₃ fixed to the output shaft 23, and a pinion P₃ that is disposed between and meshed with the ring gear R₃ and the sun gear S₃, and freely rotatably supported by the carrier CR₃.

In the drawing, 40 denotes a hydraulic pressure control system, 41 denotes an automatic transmission control unit (ECU), 45 denotes a neutral start switch, 46 denotes an oil temperature sensor, 47 denotes the C-1 rotational speed sensor, 48 denotes a brake switch, 49 denotes an engine speed sensor, 50 denotes a throttle opening sensor as a throttle opening detecting means, 51 denotes a vehicle speed sensor as a vehicle speed detecting means, and 65 denotes a clutch drum.

The operation of the automatic transmission having the above-described construction will be described next.

In Fig. 3: C1 represents the first clutch; C2, the second clutch; C3, the third clutch; B1, the first brake; B2, the second brake; B3, the third brake; B4, the fourth brake; and F1 to F3, one-way clutches. Furthermore, P represents the parking range; N is the neutral range; D is the drive range; 1st is the first speed; 2nd is the second speed; 3rd is the third speed; and 4th is the fourth speed.

In the table of Fig. 3, each symbol ○ indicates a state where the first clutch C1, second clutch C2, the third clutch C3, the first brake B1, the second brake B2, the third brake B3 or the fourth brake B4 is engaged, or a state where the corresponding one of the one-way clutches F1 to F3 is locked. Conversely, each symbol X indicates a state where the first clutch C1, second clutch C2, the third clutch C3, the first brake B1, the second brake B2, the third brake B3 or the fourth brake B4 is released, or a state where the corresponding one of the one-way clutches F1 to F3 is released.

In addition, the symbol (○) indicates a state where the third brake 3 is engaged during engine braking.

At the first speed in the D range, the first clutch C1 and the fourth brake B4 are engaged, and the one-way clutches F2, F3 are locked. Thus the rotation of the output shaft 14 (Fig. 2) is transmitted to the ring gear R₂ by the clutch C1. Since the rotation of the ring gear R₁ is inhibited by the one-way clutch F2 in this state, the sun gear S₂ idles, so that the rotation of the carrier CR₂ is considerably slowed down and transmitted to the counter drive gear 21.

The rotation transmitted from the counter drive gear 21 to the counter driven gear 22 is transmitted to the ring gear R₃. Since the sun gear S₃ is inhibited from rotating by the fourth brake B4, the rotation of the carrier CR₃ is further slowed down and transmitted to the output shaft 23.

At the second speed in the D range, the first clutch C1, the first brake B1, the second brake B2 and the fourth brake B4 are engaged, and the one-way clutches F1, F3 are locked. Since the rotation of the output shaft 14 is transmitted to the ring gear R₂ by the clutch C1, and the second brake B2 and the one-way clutch F1 inhibit the sun gear S₂ from rotating, the rotation of the ring gear R₂ is slowed down and transmitted to the carrier CR₂. The rotation of the carrier CR₂ is then transmitted to the counter drive gear 21 while idling the ring gear R₁.

The rotation transmitted from the counter drive gear 21 to the counter driven gear 22 is transmitted to the ring gear R₃. Since the fourth brake B4 inhibits the sun gear S₃ from rotating, the rotation of the carrier CR₃ is slowed down and transmitted to the output shaft 23.

At the third speed in the D range, the first clutch C1, the third clutch C3, the first brake B1 and the second brake B2 are engaged, and the one-way clutch F1 is locked. Since the rotation of the output shaft 14 is transmitted to the ring gear R₂ by the first clutch C1, and the second brake B2 and the one-way clutch F1 inhibit the sun gear S₂ from rotating, the rotation of the ring gear R₂ is slowed down and transmitted to the carrier CR₂, so that the rotation of the carrier CR₂ is transmitted to the counter drive gear 21 while idling the ring gear R₁.

The rotation transmitted from the counter drive gear 21 to the counter driven gear 22 is transmitted to the ring gear R₃. Since the third clutch C3 inhibits the carrier CR₃ and the sun gear S₃ from rotating relative to each other, the third planetary gear unit 38 is in a direct-coupled state. Thus the rotation of the counter driven gear 22 is directly transmitted to the output shaft 23.

At the fourth speed in the D range, the first clutch C1, the second clutch C2, the third clutch C3 and the second brake B2 are engaged. The rotation of the output shaft 14 is thus transmitted to the ring gear R₂ by the first clutch C1 and to the sun gear S₂ by the second clutch C2, so that the first planetary gear unit 31 and the second planetary gear unit 32 are in a direct-coupled state. Thus the rotation of the output shaft 11 is directly transmitted to the counter drive gear 21.

The rotation transmitted from the counter drive gear 21 to the counter driven gear 22 is transmitted to the ring gear R₃. Since the third clutch C3 inhibits the carrier CR₃ and the sun gear S₃ from rotating relative to each other, the third planetary gear unit 38 is in a direct-coupled state. Thus the rotation of the counter driven gear 22 is directly transmitted to the output shaft 23.

The automatic transmission is provided with the hydraulic pressure control system 40 for engaging and disengaging the first clutch C1, the second clutch C2, the third clutch C3, the first brake B1, the second brake B2, the third brake B3, and the fourth brake B4 so as to achieve shifts to the individual speeds.

The engine 10 is provided with an engine control system (not shown) so that the engine 10 can be controlled by the engine control system.

The hydraulic pressure control system 40 and the engine control system are connected to the automatic transmission control unit 41 and operated according to control programs of the automatic transmission control unit 41.

The automatic transmission control unit 41 is connected to: the C-1 rotational speed sensor 47 for detecting a C-1 rotational speed, that is, a rotational speed of the clutch drum 65 of the first clutch C1; the engine speed sensor 49 for detecting an engine speed at the input end of the torque converter 12; the throttle opening sensor 50 for detecting a throttle opening θ; and the vehicle speed sensor 51 for detecting a rotational speed of the output shaft 23 of the transmission apparatus 16 as a vehicle speed v.

The engine speed sensor 49 is able to detect: (i) an engine speed based on the rotational speed of a drive plate (not shown) disposed on the input side of the torque converter 12 or the revolution speed of the engine 10 itself; and (ii) an engine speed based on the ignition timing of the engine 10.

When a vehicle is starting on a road surface with a low friction coefficient, such as an icy road, a snow-covered road, or mud, the drive wheels 62 (Fig. 1) are likely to slip. The idle rotations of the drive wheels 62 cause the automatic transmission control unit 41 to determine that the vehicle speed v has increased, so that an up-shift is performed. As a result, the drive wheels 62 idly race at an increased rotational speed.

Further, if only one of the right and left drive wheels 62 idly rotates and an up-shift is performed so that the rotational speed difference between the right and left drive wheels becomes very large, the rotation of the drive shafts 27, 28 relative to the differential apparatus 26 becomes large, requiring forced supply of lubricant between them. Thus it becomes necessary to provide the differential apparatus 26 with a lubricant groove, complicating the structure of the differential apparatus 26.

To avoid this problem, the drive-wheel idle rotation determining means 93 of the automatic transmission control unit 41 reads a lockup-on signal, and determines whether the lockup clutch L/C is released. If the lockup clutch L/C is released, the drive-wheel idle rotation determining means 93, shown in Fig. 1, calculates a rotational speed ratio r between the engine speed detected by the engine speed sensor 49 and the C-1 rotational speed detected by the C-1 rotational speed sensor 47, and determines whether the rotational speed ratio r is equal to or greater than a predetermined value α.

Although this embodiment calculates a rotational speed ratio r while the lockup clutch L/C is released, another construction is also permissible where it is determined whether a predetermined condition for starting a shift inhibition processing has been established, and when the starting condition is established, the rotational speed ratio r is calculated.

Examples of the starting condition are: the lockup clutch L/C is released; the vehicle speed is equal to or less than a predetermined value (for example, 60 km/h); and the throttle opening θ is equal to or greater than a predetermined value (for example, 5%).

If the rotational speed ratio r is equal to or greater than the predetermined value α, the drive-wheel idle rotation determining means 93 determines that at least one of the drive wheels 62 are idly rotating.

Generally, if the drive wheels 62 idle or race so that the output shaft 23 of the transmission apparatus 16 becomes unloaded, the C-1 rotational speed of the output end of the torque converter 12 increases and the rotational speed ratio r becomes a value abnormally close to "1" compared with the rotational speed ratio r in normal driving conditions. Therefore, this embodiment determines that the drive wheels 62 are idly rotating, if the rotational speed ratio r becomes equal to or greater than the predetermined value α.

With this structure, this embodiment has only to calculate the rotational speed ratio r between the engine speed and the C-1 rotational speed, and does not need to determine a change of the rotational speed of the output shaft 23 of the transmission apparatus 16. Thus, the embodiment eliminates the need to monitor the rotational speed of the output shaft 23. In addition, because the rotational speed ratio r is unlikely to vary, there is no need to determine rotational speed ratios r several times. Thus, the embodiment is able to detect idle rotation of the drive wheels 62 in a short time period and quickly determine whether to inhibit a shift.

Furthermore, because the predetermined value α can be established regardless of the characteristics of the engine 10, the embodiment eliminates the need to establish different values a for different types of engines 10, thus increasing flexibility.

Since it also becomes unnecessary to establish predetermined values α corresponding to engine loads, the automatic transmission control unit 41 does not require an increased memory capacity.

When the drive-wheel idle rotation determining means 93 determines that the drive wheels 62 are idling, the shift inhibiting means (not shown) provided in the automatic transmission control unit 41 inhibits the transmission apparatus 16 from performing a shift.

Since the idle rotation of the drive wheels 62 can be detected in a reduced time period, the embodiment eliminates the incidence of an unfavorable shift before shift inhibition is achieved.

Thus, even if the drive wheels 62 idle or race on a road with a small friction coefficient, such as an icy road, a snow-covered road, or mud, at the start of running, the embodiment prevents an up-shift operation. Therefore, since the embodiment prevents an incident where only one of the right and left drive wheels 62 races to an increased extent, the embodiment prevents the rotational speed difference between the right and left drive wheels 62 from becoming extremely large. The embodiment also prevents the differential apparatus 26 and the drive shafts 27, 28 from rotating relative to each other to increased extents.

As a result, there is no need for a forced supply of lubricant between the differential apparatus 26 and the drive shafts 27, 28, and consequently no need to form a lubricant groove in the differential apparatus 26. Thus the construction of the differential apparatus 26 can be simplified, and the durability of the differential apparatus 26 can be improved.

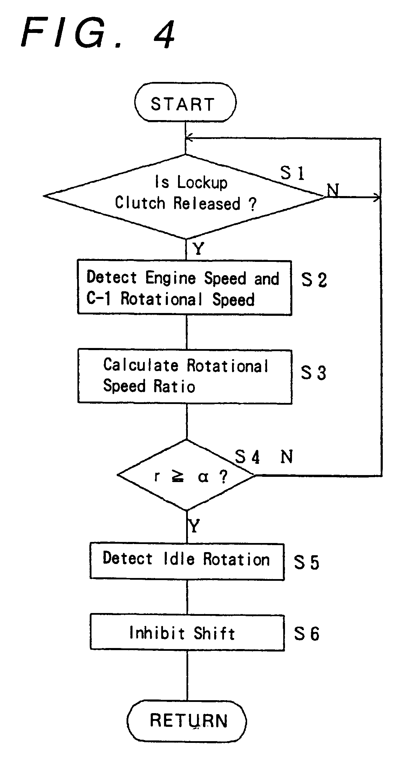

Fig. 4 is a flowchart illustrating the operation of the automatic transmission control system according to the first embodiment of present invention.

The steps for accomplishing this embodiment are as follows:
Step S1: The control system reads a lockup-on signal, and waits for the lockup clutch L/C (Fig. 2) to become released.
Step S2: The control system detects an engine speed using the engine speed sensor 49, and a C-1 rotational speed using the C-1 rotational speed sensor 47.
Step S3: The control system calculates a rotational speed ratio r between the engine speed and the C-1 rotational speed.
Step S4: The drive-wheel idle rotation determining means 93 determines whether the rotational speed ratio r is equal to or greater than the predetermined value α. If the rotational speed ratio r is equal to or greater than the predetermined value α, the operation proceeds to step S5. If the rotational speed ratio r is less than the predetermined value α, the operation returns to step S1.
Step S5: The control system detects idle rotation of the drive wheels 62 using the drive-wheel idle rotation determining means 93.
Step S6: The shift inhibiting means of the automatic transmission control unit 41 inhibits the transmission apparatus 16 from performing a shift.

The cancellation of shift inhibition will next be described.

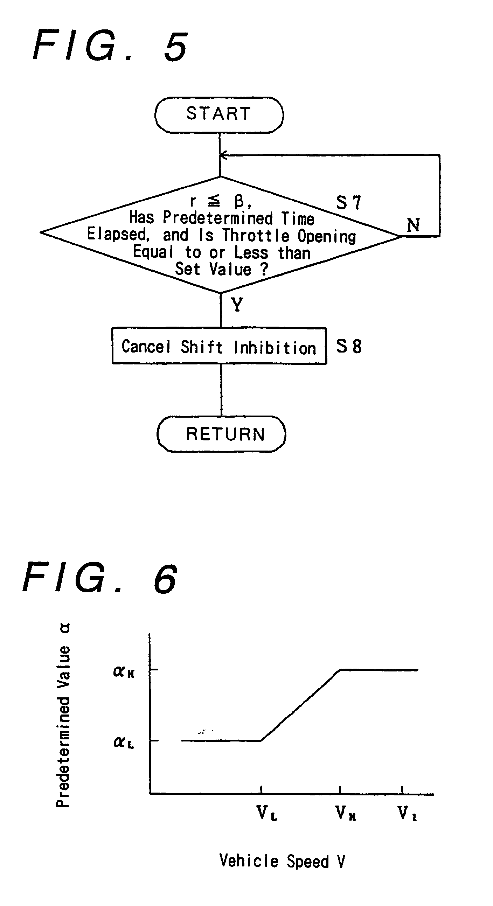

Fig. 5 is a flowchart illustrating the cancellation of shift inhibition according to the first embodiment of the invention.

In this case, a load occurs on the drive wheels 62 during a shift inhibition following detection of idle rotation of the drive wheels 62 by the drive-wheel idle rotation determining means 93 (Fig. 1). When the load is transmitted to the output shaft 23 (Fig. 2) of the transmission apparatus 16, the C-1 rotational speed decreases and, consequently, the rotational speed ratio r decreases.

So, if, for example, the rotational speed ratio r becomes equal to or less than a predetermined value β (for example, 0.8) predetermined for the cancellation of shift inhibition, the shift inhibition canceling means (not shown) of the automatic transmission control unit 41 removes the inhibition of shift operation. Alternatively, cancellation of the shift inhibition can be triggered by the throttle opening θ obtaining a predetermined value, or a certain time period τₒ lapses. Thus, with shift inhibition canceled, the transmission apparatus 16 becomes able to perform normal shift operation when a load is applied to the drive wheels 62.

This shift inhibition canceling procedure is accomplished as follows:
Step S7: The control system determines whether the rotational speed ratio r is equal to or less than the predetermined value β, or whether the throttle opening θ is equal to or less than a predetermined value (for example, 3%), or whether the shift inhibition has continued for at least a predetermined time period τ₀ (for example, 30 seconds). If any one of these conditions for canceling shift inhibition is satisfied, the operation proceeds to step S8.
Step S8: The shift inhibition canceling means of the automatic transmission control unit 41 removes the shift inhibition.

Since the C-1 rotational speed is proportional to the vehicle speed V, the rotational speed ratio r increases with increases of the vehicle speed V. Thus, when the vehicle speed V is high, the drive-wheel idle rotation determining means 93 may provide a false detection of idle rotation of the drive wheels 62.

Next described will be a second embodiment that changes the predetermined value α corresponding to vehicle speeds v.

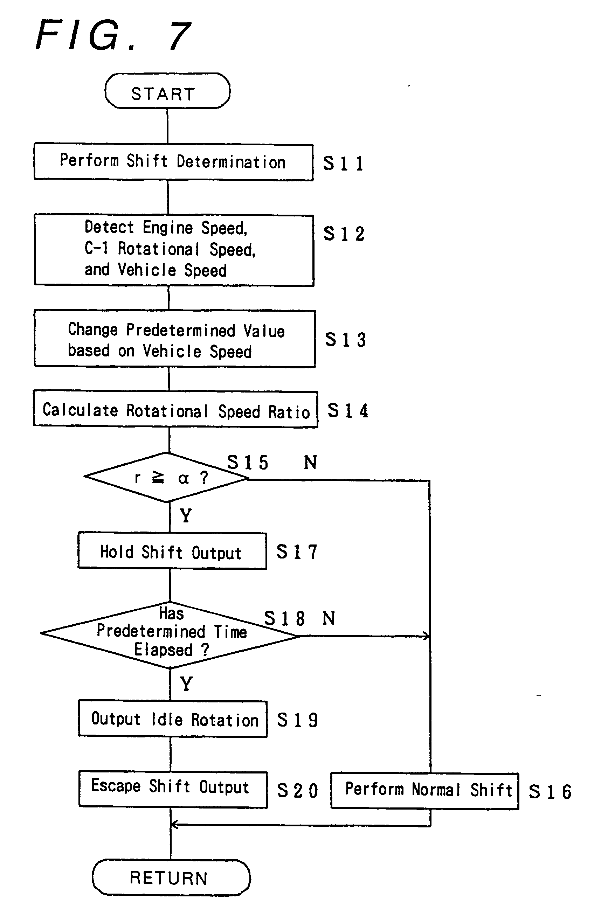

Fig. 6 is a graph indicating the relation between the vehicle speed and the predetermined value according to the second embodiment of the invention. Fig. 7 is a flowchart illustrating the operation of the automatic transmission control system according to the second embodiment of the invention. In the graph of Fig. 6, the abscissa axis represents the vehicle speed v and the ordinate axis represents the predetermined value α.

As indicated by the graph of Fig. 6, when the vehicle speed is less than a first value V_{L} (for example, 30 km/h), the predetermined value a is set to the minimum value α_{L} (for example, 0.94). When the vehicle speed v is equal to or greater than the first value V_{L} and less than a second value V_{H} (for example, 50 km/h), the predetermined value α increases proportionally to the vehicle speed v. When the vehicle speed v is equal to or greater than the second value V_{H}, the predetermined value α is set to the maximum value α_{H} (for example, 0.97).

If the vehicle speed v exceeds a predetermined value V1 (for example, 60 km/h), the shift inhibiting means (not shown) of the automatic transmission control unit 41 (Fig. 2) does not perform shift inhibition.

The predetermined values α corresponding to vehicle speeds V are stored in a memory (not shown) of the automatic transmission control unit 41. The drive-wheel idle rotation determining means 93 (Fig. 1) reads from the memory the predetermined value α corresponding to a detected vehicle speed v, and determines whether the drive wheels 62 are idly rotating, on the basis of the predetermined value α read from the memory.

Since the predetermined value α is thus changed corresponding to vehicle speeds v so that the rotational speed ratio r increases with increases of the vehicle speed V, the embodiment prevents the drive-wheel idle rotation determining means 93 from providing a false detection of idle rotation of the drive wheels 62. Thus, the embodiment ensures reliable inhibition of the transmission apparatus 16 from performing a shift.

According to this embodiment, the shift operation of the transmission apparatus 16 is inhibited in the following manner.

If it is determined that the rotational speed ratio r is equal to or greater than the predetermined value α, the automatic transmission control unit 41 performs shift determination. Then, even if a shift output is produced, the shift inhibiting means temporarily holds the shift output.

At the same time, the shift inhibition canceling means starts time measurement by a first timer (not shown). Until a predetermined time τ₁ (for example, 0.1 second) elapses, the embodiment determines whether the rotational speed ratio r is equal to or greater than the predetermined value α. If it is equal to or greater than the predetermined value α within the predetermined time τ₁, the shift inhibiting means erases the shift output.

This procedure is accomplished as follows:
Step S11: The automatic transmission control unit 41 performs shift determination.
Step S12: The automatic transmission control unit 41 detects an engine speed using the engine speed sensor 49, a C-1 rotational speed using the C-1 rotational speed sensor 47, and a vehicle speed v using the vehicle speed sensor 51.
Step S13: The automatic transmission control system 51 changes the predetermined value α in accordance with the vehicle speed v.
Step S14: The automatic transmission control unit 41 calculates the rotational speed ratio r between the engine rotational speed and the C-1 rotational speed.
Step S15: It is determined whether the rotational speed ratio r is equal to or greater than the predetermined value α. If the rotational speed ratio r is equal to or greater than the predetermined value α, the operation proceeds to step S17. If the rotational speed ratio r is less than predetermined value α, the operation proceeds to step S16.
Step S16: The automatic transmission control unit 41 performs normal shift operation.
Step S17: The shift inhibiting means of the automatic transmission control unit 41 temporarily holds a shift output and starts time measurement by the first timer.
Step S18: It is determined whether the predetermined time period τ₁ has elapsed while the rotational speed ratio r has remained equal to or greater than the predetermined value α. If the predetermined time period τ₁ has elapsed, the operation proceeds to step S19. If not, the operation proceeds to step S16.
Step S19: The automatic transmission control unit 41 detects idle rotation of the drive wheels 62 using the drive-wheel idle rotation determining means 93.
Step S20: The shift inhibiting means of the automatic transmission control unit 41 erases the shift output.

A third embodiment of the invention will be described.

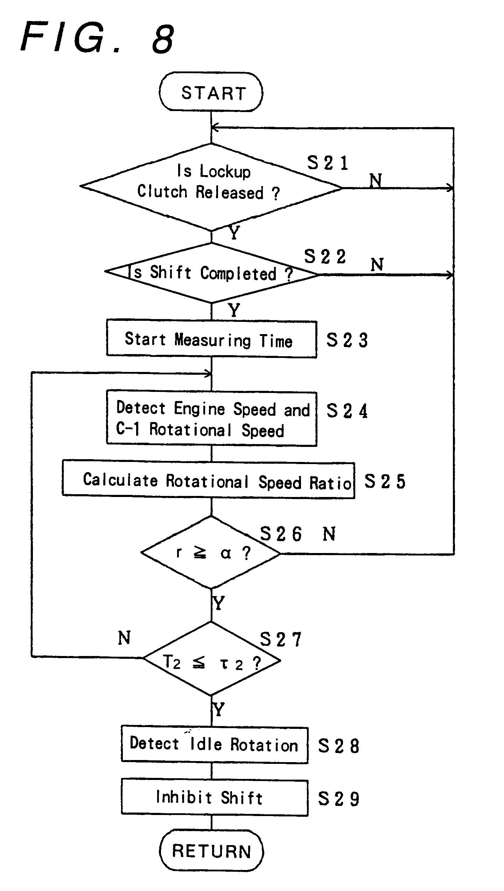

Fig. 8 is a flowchart illustrating the operation of an automatic transmission control system according to the third embodiment of the invention.

In this case, in normal driving conditions, immediately after the completion of a shift by the transmission apparatus 16 (Fig. 1), the C-1 rotational speed at the output end of the torque converter 12 decreases and, consequently, the rotational speed difference between the engine speed and the C-1 rotational speed increases.

So, the drive-wheel idle rotation determining means 93 starts measuring time using a second timer (not shown) after detection of the end of a shift and, until a predetermined time τ₂ elapses, determines whether the rotational speed ratio r is equal to or greater than the predetermined value α.

Thereby, this embodiment is able to prevent the drive-wheel idle rotation determining means 93 from providing a false detection of idle rotation of the drive wheels 62. The end of a shift can be detected by, for example, changes in hydraulic pressure caused by the engagement or disengagement of the first clutch C1 (Fig. 2), the second clutch C2, the third clutch C3, the first brake B1, the second brake B2, the third brake B3 and the fourth brake B4.

This procedure is accomplished as follows:
Step S21: The control system reads a lockup-on signal and waits for the lockup clutch L/C to become released.
Step S22: The shift completion detecting means (not shown) of the automatic transmission control unit 41 determines whether a shift is completed. If it is completed, the operation proceeds to step S23. If not, the operation returns to step S21.
Step S23: The control system starts time measurement using the second timer.
Step S24: The control system detects an engine speed using the engine speed sensor 49, and a C-1 rotational speed using the C-1 rotational speed sensor 47.
Step S25: The control system calculates a rotational speed ratio r between the engine speed and the C-1 rotational speed.
Step S26: The control system determines whether the rotational speed ratio r is equal to or greater than the predetermined value α. If the rotational speed ratio r is equal to or greater than the predetermined value α, the operation proceeds to step S27. If the rotational speed ratio r is less than the predetermined value α, the operation returns to step S21.
Step S27: The control system determines whether the time T₂ measured by the second timer is equal to or less than the predetermined time τ₂. If the measured time T₂ is equal to or less than the predetermined time τ₂, the operation proceeds to step S28. If the measured time T₂ is longer than the predetermined timer τ₂, the operation returns to S24.
Step S28: The control system detects idle rotation of the drive wheels 62 using the drive-wheel idle rotation determining means 93.
Step S29: The shift inhibiting means (not shown) of the automatic transmission control unit 41 inhibits the transmission apparatus 26 from performing a shift.

A fourth embodiment of the invention will now be described.

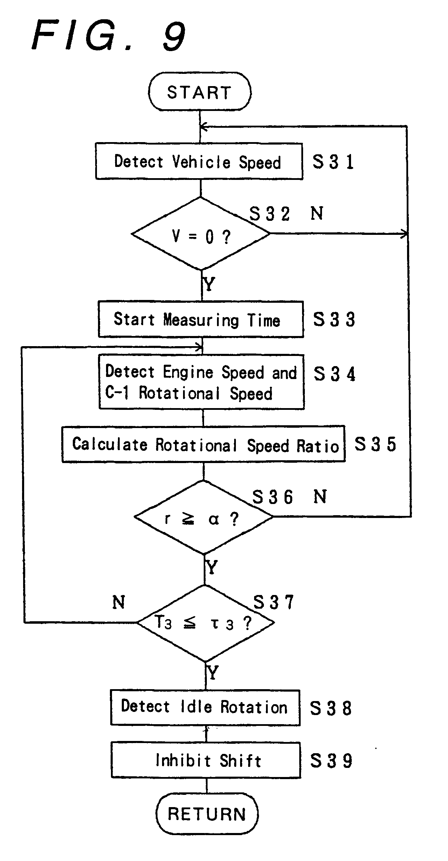

Fig. 9 is a flowchart illustrating the operation of an automatic transmission control system according to the fourth embodiment of the invention.

In this case, after detection of a vehicle speed v of 0, the drive-wheel idle rotation determining means 93 (Fig. 1) starts time measurement by a third timer (not shown) and, until a predetermined time τ₃ elapses, determines whether the rotational speed ratio r is greater than the predetermined value α.

Thereby, the fourth embodiment prevents the drive-wheel idle rotation determining means 93 from providing a false detection of idle rotation of the drive wheels 62 during inertia running. For instance, when the vehicle is traveling on downhill roads or high-speed cruising, the rotational speed ratio r is close to 1(r > α*)* and idle rotation of the drive wheels is detected even if the drive wheels are not in idle rotation since it takes some time for the vehicle to obtain inertia running. To ensure reliable detection of idle rotation of the drive wheels 62, the fourth embodiment detects idle rotation of the drive wheels before the vehicle enters inertia running.

This embodiment is accomplished by the following procedure:
Step S31: The control system detects a vehicle speed v using the vehicle speed sensor 51 (Fig. 2).
Step S32: The control system determines whether the vehicle speed v is 0. If the vehicle speed v is 0, the operation proceeds to step S33. If the vehicle speed v is not 0, the operation returns to step S31.
Step S33: The control system starts time measurement by the third timer.
Step S34: The control system detects an engine speed using the engine speed sensor 49, and a C-1 rotational speed using the C-1 rotational speed sensor 47.
Step S35: The control system calculates a rotational speed ratio r between the engine speed and the C-1 rotational speed.
Step S36: The control system determines whether the rotational speed ratio r is equal to or greater than the predetermined value α*.* If the rotational speed ratio r is equal to or greater than the predetermined value α, the operation proceeds to step S37. If the rotational speed ratio r is less than the predetermined value α, the operation returns to step S31.
Step S37: The control system determines whether the time T₃ measured by the third timer is equal to or less than the predetermined time τ₃. If the measured time T₃ is equal to or less than the predetermined time τ₃, the operation proceeds to step S38. If the measured time T₃ is longer than the predetermined timer τ₃, the operation returns to S34.
Step S38: The control system detects idle rotation of the drive wheels 62 using the drive-wheel idle rotation determining means 93.
Step S39: The shift inhibiting means (not shown) of the automatic transmission control unit 41 inhibits the transmission apparatus 16 from performing a shift.

A fifth embodiment of the invention will now be described.

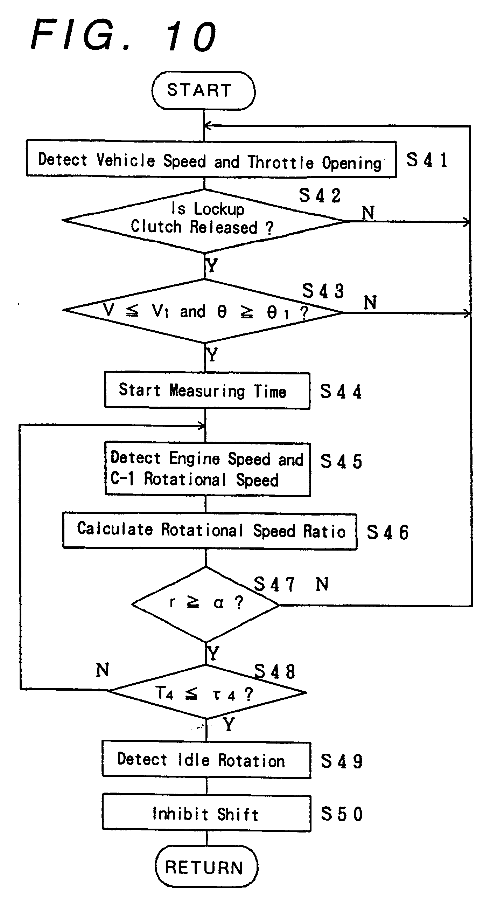

Fig. 10 is a flowchart illustrating the operation of an automatic transmission control system according to the fifth embodiment of the invention.

In this case, after detection of a vehicle speed v equal to or less than a predetermined value V₁ and a throttle opening θ equal to or greater than a predetermined value θ₁, the drive-wheel idle rotation determining means 93 (Fig. 1) starts time measurement by a fourth timer (not shown) and, within a predetermined time τ₄, determines whether the rotational speed ratio r is greater than the predetermined value α.

Thereby, this embodiment prevents the drive-wheel idle rotation determining means 93 from providing a false detection during inertia running, such as travel on downhill roads or high-speed cruising, ensuring reliable detection of idle rotation of the drive wheels 62.

The procedure for accomplishing this embodiment is as follows:
Step S41: The control system detects a vehicle speed v using the vehicle speed sensor 51 (Fig. 2) and a throttle opening θ using the throttle opening sensor 50.
Step S42: The control system reads a lockup-on signal and determines whether the lockup clutch L/C is released. If the lockup clutch L/C is released, the operation proceeds to step S43. If it is not released, the operation returns to step S41.
Step S43: The control system determines whether the vehicle speed v is equal to or less than the predetermined value V₁ and the throttle opening θ is equal to or greater than the predetermined value θ₁. If the vehicle speed v is equal to or less than the predetermined value V₁ and the throttle opening θ is equal to or greater than the predetermined value θ₁, the operation proceeds to step S44. If the vehicle speed v is greater than the predetermined value V₁ or the throttle opening θ is less than the predetermined value θ₁, the operation returns to step S41.
Step S44: The control system starts time measurement by the fourth timer.
Step S45: The control system detects an engine speed using the engine speed sensor 49, and a C-1 rotational speed using the C-1 rotational speed sensor 47.
Step S46: The control system calculates a rotational speed ratio r between the engine speed and the C-1 rotational speed.
Step S47: The control system determines whether the rotational speed ratio r is equal to or greater than the predetermined value α. If the rotational speed ratio r is equal to or greater than the predetermined value α, the operation proceeds to step S48. If the rotational speed ratio r is less than the predetermined value α, the operation returns to step S41.
Step S48: The control system determines whether the time T₄ measured by the fourth timer is equal to or less than the predetermined time τ₄. If the measured time T₄ is equal to or less than the predetermined time τ₄, the operation proceeds to step S49. If the measured time T₄ is longer than the predetermined timer τ₄, the operation returns to S45.
Step S49: The control system detects idle rotation of the drive wheels 62 using the drive-wheel idle rotation determining means 93.
Step S50: The shift inhibiting means (not shown) of the automatic transmission control unit 41 inhibits the transmission apparatus 16 from performing a shift.

While the invention has been described with reference to what are presently considered to be preferred embodiments thereof, it is to be understood that the invention is not limited to the disclosed embodiments. To the contrary, the invention is intended to cover various modifications and equivalent arrangements included within the spirit and scope of the appended claims.

## Claims

1. A control system of an automatic transmission comprising:
a fluid transmission apparatus connected to an engine;
input speed detecting means for detecting an input-end rotational speed of the fluid transmission apparatus;
output speed detecting means for detecting an output-end rotational speed of the fluid transmission apparatus; and
drive-wheel idle rotation determining means for determining whether the rotational speed ratio of the output-end rotational speed to the input-end rotational speed is equal to or greater than a predetermined value, and for, if the rotational speed ratio is equal to or greater than the predetermined value, determining that a drive wheel is idly rotating.

2. A control system of an automatic transmission according to claim 1, further comprising shift completion detecting means for detecting completion of a shift, said drive-wheel idle rotation determining means determining that a drive wheel is idly rotating, if the rotational speed ratio is equal to or greater than the predetermined value within a predetermined time period following detection of the completion of a shift.

3. A control system of an automatic transmission according to claim 1 or 2, further comprising vehicle speed detecting means for detecting a vehicle speed, said drive-wheel idle rotation determining means determining that a drive wheel is idly rotating, if the rotational speed ratio is equal to or greater than the predetermined value within a predetermined time period following detection of a vehicle speed of 0.

4. A system according to claim 1, 2 or 3, further comprising
vehicle speed detecting means for detecting a vehicle speed, and throttle opening detecting means for detecting a throttle opening, said drive-wheel idle rotation determining means determining that a drive wheel is idly rotating, if the vehicle speed is equal to or less than a predetermined value and the throttle opening is equal to or greater than a predetermined value and the rotational speed ratio is equal to or greater than the predetermined value.

5. A system according to any of claims 1 to 4, further comprising
vehicle speed detecting means for detecting a vehicle speed, and wherein said predetermined value is changed on the basis of the detected vehicle speed.

6. A control system of an automatic transmission comprising:
a fluid transmission apparatus connected to an engine;
input speed detecting means for detecting an input-end rotational speed of the fluid transmission apparatus;
output speed detecting means for detecting an output-end rotational speed of the fluid transmission apparatus;
drive-wheel idle rotation determining means for determining whether the rotational speed ratio of the output-end rotational speed to the input-end rotational speed is equal to or greater than a predetermined value, and for, if the rotational speed ratio is equal to or greater than the predetermined value, determining that a drive wheel is idly rotating; and shift inhibiting means for inhibiting a transmission apparatus from performing a shift if it is determined that the drive wheel is idly rotating.

7. A control system of an automatic transmission according to claim 6, wherein when shift determination is performed and the drive-wheel idle rotation determining means detects idle rotation of a drive wheel, the output of a shift signal is held, and wherein the output of the shift signal is erased if the drive-wheel idle rotation determining means detects idle rotation of a drive wheel within a predetermined time period following the shift determination.

8. A control system of an automatic transmission according to claim 6 or 7, further comprising shift completion detecting means for detecting completion of a shift, said drive-wheel idle rotation determining means determining that a drive wheel is idly rotating, if the rotational speed ratio is equal to or greater than the predetermined value within a predetermined time period following detection of the completion of a shift.

9. A system according to claim 6, 7, or 8, further comprising
vehicle speed detecting means for detecting a vehicle speed, said drive-wheel idle rotation determining means determining that a drive wheel is idly rotating, if the rotational speed ratio is equal to or greater than the predetermined value within a predetermined time period following detection of a vehicle speed of 0.

10. A system according to any of claims 6 to 9, further comprising
vehicle speed detecting means for detecting a vehicle speed, and throttle opening detecting means for detecting a throttle opening, said drive-wheel idle rotation determining means determining that a drive wheel is idly rotating, if the vehicle speed is equal to or less than a predetermined value and the throttle opening is equal to or greater than a predetermined value and the rotational speed ratio is equal to or greater than the predetermined value.

11. A system according to any of claims 6 to 10, further comprising
vehicle speed detecting means for detecting a vehicle speed, and wherein said predetermined value is changed on the basis of the detected vehicle speed.

12. A system according to any of claims 6 to 11, further comprising
shift inhibition canceling means for canceling the inhibition of the transmission apparatus from performing a shift, if one of the following conditions is satisfied: the rotational speed ratio is equal to or less than a predetermined value determined for the cancellation of shift inhibition; the throttle opening is equal to or less than a predetermined value; and the inhibition of a shift continues for at least a predetermined time period.
